# FASCICULE DE BREVET EUROPEEN

(11) **EP 2 189 323 B1**
(45) Date de publication et mention de la délivrance du brevet: **19.07.2017**
(21) Numéro de dépôt: 09306108.3
(22) Date de dépôt: 18.11.2009
(51) Int. Cl.: B60M 1/30

(54) **Support isolant de pistes d'alimentation**
Isolierte Träger für Speisungsflächen
Insulated support for power supply zones

(30) Priorité: 21.11.2008 FR 0857919
(43) Date de publication de la demande: 26.05.2010
(73) Titulaire: ALSTOM Transport Technologies, 93400 Saint-Ouen (FR)
(72) Inventeur: Rameau, Cyril, 75018, PARIS (FR); Gellee, Julien, DUBAI (AE); Baudienville, Guillaume, 92800, PUTEAUX (FR)
(74) Mandataire: Lavoix

(56) Documents cités:
- WO-A-2008/138401
- DE-A1- 2 455 708
- FR-A- 2 735 728
- US-A- 4 238 010
- US-A- 4 239 094

## Description

L'invention se rapporte à un support isolant de pistes d'alimentation destiné à un système de transport terrestre de type tramway, et à un procédé de fabrication de support isolant.

Il existe des systèmes d'alimentation par le sol permettant à des véhicules de type tramway de capter, au moyen d'un patin frotteur, l'énergie électrique de traction nécessaire à leur mise en mouvement et de s'affranchir de lignes aériennes peu esthétiques, en particulier au niveau des carrefours.

Un tel système est décrit dans la demande de brevet EP 1 043 186 A1. Le système décrit consiste en un assemblage d'alimentation par le sol qui comprend une série de segments de pistes de contact conducteurs, isolés entre eux et au moins partiellement découverts, une ligne électrique destinée à être alimentée en permanence, des moyens aptes à relier sélectivement les segment de pistes à la ligne électrique, ainsi que des supports de piste en matériau isolant présentant chacun en section la forme générale d'un « I ».

Sur la partie supérieure des supports sont aménagées deux gorges parallèles, disposées de manière symétrique autour d'un plan médian longitudinal perpendiculaire au plan d'extension de la partie supérieure et adaptées pour recevoir une alternance d'éléments conducteurs et isolants sous forme de barres.

Dans l'âme du profilé des supports sont aménagés quatre passages intérieurs de forme rectangulaire aptes à recevoir des barres métalliques d'une ligne électrique sous haute tension. Les passages sont disposés deux par deux de part et d'autre d'un plan médian longitudinal et orthogonal à la surface supérieure séparant en deux le profilé du support, de manière étagée sur chaque coté.

De part et d'autre du plan médian longitudinal se trouve engravée une encoche de détection, les deux encoches formant une paire destinée à recevoir des câbles d'une boucle de détection d'un champ magnétique de proximité.

Avec ce système, le signal de communication supporté par un champ magnétique de la boucle de détection est perturbé par des signaux parasites engendrés à l'intérieur des deux barres.

La demande de brevet US 4 239 094 A décrit également un support isolant de piste d'alimentation qui présente le même problème de perturbation.

Le problème technique est de diminuer l'intensité des signaux parasites perturbant le signal de communication supporté par le champ magnétique de la boucle de détection.

A cet effet, l'invention a pour objet un support isolant de piste d'alimentation électrique par le sol destiné à un système de transport terrestre, notamment de type tramway, sous forme d'un profilé en matériau isolant comprenant une face supérieure sensiblement plane destinée à recevoir des éléments de piste d'alimentation électrique et une face inférieure plane destinée à prendre appui sur le sol, le profilé étant muni d'une gorge longitudinale disposée dans la face supérieure pour recevoir un élément de piste conducteur, et étant muni d'une âme reliant la face supérieure à la face inférieure et percée d'au moins un conduit d'alimentation longitudinal destiné à recevoir une ligne d'alimentation du réseau sous haute tension, caractérisé en ce que la gorge est unique, et la gorge et chaque conduit d'alimentation sont disposés de manière centrale et de manière symétrique autour d'un plan médian longitudinal du support perpendiculaire à la face supérieure.

Suivant des modes particuliers de réalisation, le support isolant comporte l'une ou plusieurs des caractéristiques suivantes :
- la largeur de la gorge est au moins égale à 10 cm ;
- la gorge comprend un fond dont la section transversale des arêtes longitudinales présente une forme en queue d'aronde ;
- la face supérieure isolante dépasse sur chaque coté dans le sens de la largeur un bord longitudinal de la gorge d'une distance supérieure ou égale à 45 mm ;
- le support comprenant au moins une alvéole de fixation de piste située en dessous de la gorge centrale, l'alvéole de fixation étant pourvue d'un moyen de fixation ;
- une alvéole de fixation est un conduit d'alimentation ;
- le support comprend deux ailes latérales longitudinales situées de chaque côté de la gorge, chaque aile étant percée d'un conduit de câble de boucle magnétique de détection situé à une distance au moins égale à 85 mm par rapport au plan médian ; - chaque aile comporte une alvéole d'allègement située à un même niveau que les alvéoles de fixation ;
- le support comprend une paire de parois externes et au moins une paire de parois internes respectivement inclinées et parallèles par rapport au plan médian, les deux parois de chaque paire étant symétriques par rapport au plan médian et reliant la face supérieure à la face inférieure ;
- le support comprend une seule paire de parois internes reliant la face supérieure à a la face inférieure ;
- le support est monobloc ;
- le support comprend trois profilés élémentaires distincts correspondant respectivement à trois tranches, une première tranche comprenant une première paroi externe et une première moitié d'une première paroi interne, une deuxième tranche centrale comprenant une deuxième moitié de la première paroi interne et une première moitié d'une deuxième paroi interne, une troisième tranche comprenant une deuxième moitié de la deuxième paroi interne et une deuxième paroi externe, et les trois profilés élémentaires sont fixés côte à côte entre eux par un moyen de fixation notamment de la colle ;
- les trois profilés élémentaires distincts présentent chacune un rayon de courbure allant croissant depuis le profilé élémentaire situé le plus près d'un centre de courbure jusqu'au profilé élémentaire situé la plus loin du centre de rayon de courbure ;
- le support comprend deux profilés élémentaires distincts assemblés et fixés entre eux et un insert longitudinal, percé de l'au moins un conduit central, enserré entre les deux profilés élémentaires ; et
- le matériau isolant est un matériau composite en fibres de verre pultrudées.

L'invention a également pour objet un assemblage de supports isolants tel que défini ci-dessus, caractérisé en ce qu'il comprend une éclisse de raccordement des deux supports isolants, l'éclisse comportant deux flasques latéraux d'extension longitudinale, et un couvercle avec deux ailes latérales d'extension longitudinale et d'une épaisseur prédéterminée, et en ce que chaque flasque latéral comprend une face interne conformée à ses deux extrémités longitudinales à la forme externe des deux parois externes situées du même côté des deux supports.

Suivant des modes particuliers de réalisation, l'assemblage comporte l'une ou plusieurs des caractéristiques suivantes :
- l'épaisseur du couvercle est légèrement supérieure à la profondeur de la gorge, et les flasques latéraux comprennent chacun une nervure de support du couvercle disposée sur la face interne associée de sorte à être située chacune au même niveau que le fond de la gorge lorsque les flasques latéraux sont assemblés aux parois externes des deux supports isolants ; et
- l'assemblage comprend des moyens de serrage des flasques latéraux autour des supports isolants.

L'invention a également pour objet un procédé de fabrication d'un support isolant de piste d'alimentation électrique par le sol destiné à un système de transport terrestre notamment de type tramway, comprenant les étapes consistant à :
tirer par pultrusion de fibres de verre au moins deux profilés élémentaires sur une longueur prédéterminée, chaque profilé élémentaire correspondant à une tranche longitudinale d'un profilé de support en matériau isolant, le profilé de support comprenant une face supérieure sensiblement plane destinée à recevoir des éléments de piste d'alimentation électrique et une face inférieure plane destinée à prendre appui sur le sol, le profilé étant munie d'un gorge centrale longitudinale disposée sur la face supérieure pour recevoir un élément de piste conducteur, et étant muni d'une âme reliant la face supérieure à la face inférieure et percée d'au moins un conduit longitudinal destiné à recevoir une ligne d'alimentation du réseau sous haute tension, la gorge étant unique, la gorge et chaque conduit d'alimentation étant disposé de manière symétrique autour d'un plan médian longitudinal perpendiculaire à la face supérieure,
disposer les profilés élémentaires côte à côte,
encoller des surfaces longitudinales de chaque profilé élémentaire correspondant à la mise en contact des tranches,
cintrer en les assemblant les profilés élémentaires par précontrainte sur une matrice de préformage selon un rayon de courbure centrée autour d'une valeur moyenne prédéterminée, le rayon de courbure variant de manière croissante en fonction de la position du profilé élémentaire par rapport à un centre de courbure,
coller les profilés élémentaires entre en les serrant à l'aide de tirants,
reprendre les deux extrémités du support isolant en mettant à un même niveau les extrémités de chaque profilé élémentaire, et
resserrer les profilés élémentaires par des tirants formant des éléments de sécurité en cas de décollage des profilés élémentaires.

L'invention sera mieux comprise à la lecture de la description d'une unique forme de réalisation qui va suivre, donnée uniquement à titre d'exemple et faite en se référant aux dessins sur lesquels :
- la Figure 1 est une vue en perspective d'un tronçon de support isolant pourvu d'une piste d'alimentation électrique conductrice,
- la Figure 2 est une vue de face du tronçon de support isolant de la figure 1,
- la Figure 3 est une vue en perspective d'une première variante d'un tronçon cintré du support isolant de la figure 1,
- la Figure 4 est une vue en perspective d'une deuxième variante d'un tronçon cintré du support isolant de la figure 1,
- la Figure 5 est une vue de dessus du tronçon cintré de la figure 3,
- la Figure 6 est un ordinogramme d'un procédé de fabrication du tronçon cintré des figures 3 et 4, et
- la Figure 7 est une vue en perspective d'un assemblage de deux supports isolants du type décrit à la figure 1 raccordés par une éclisse.

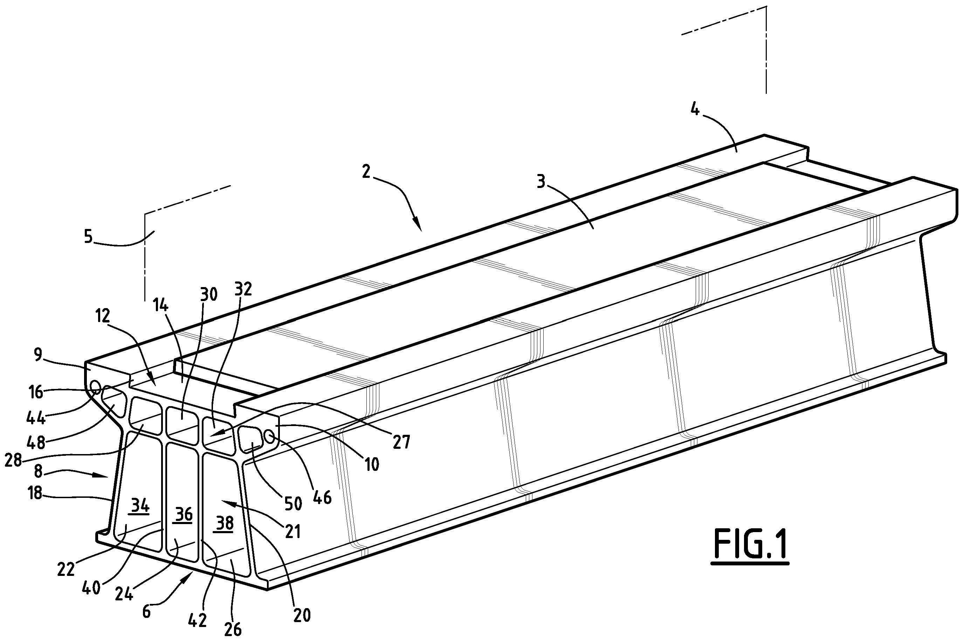

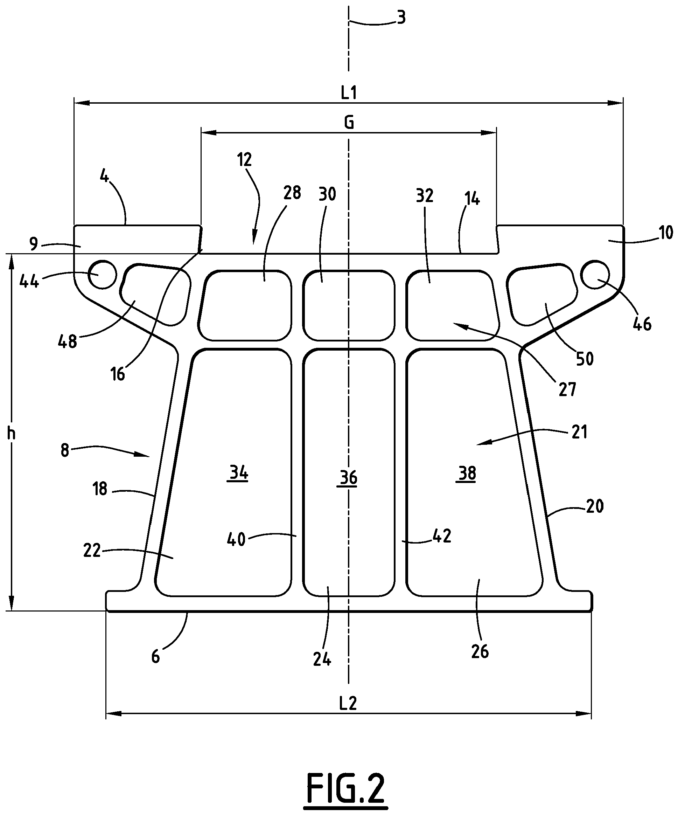

Les Figures 1 et 2 représentent un tronçon de support isolant 2, ici rectiligne, destiné à recevoir selon le cas un élément de piste d'alimentation conducteur d'alimentation, un élément isolant, ou une succession d'éléments conducteurs et isolants de pistes.

Le tronçon de support isolant 2 se présente sous la forme d'un profilé rectiligne de section transversale contenue dans un gabarit trapézoïdal et de longueur maximale égale à 18 mètres.

Ici, le tronçon de support 2 est monobloc en étant constitué d'un seul tenant en un matériau homogène.

Le tronçon de support isolant 2 comprend une face supérieure 4 sensiblement plane destinée à recevoir un ou des éléments de piste d'alimentation électrique 3 et, disposée en parallèle par rapport à la face supérieure 4, une face inférieure 6 plane destinée à être face au sol en étant posée sur celui soit directement, soit indirectement au travers de semelles de pose.

Le profilé présente un plan médian longitudinal de symétrie 5, perpendiculaire à la face supérieure 4 qui divise le profilé du support 2 en deux parties symétriques.

Le tronçon de support isolant comprend également une âme 8 reliant la face supérieure 4 et la face inférieure 6 ainsi que, disposées de chaque coté de l'âme directement sous la face supérieure 4, deux ailes 9, 10 latérales d'extension longitudinale.

La face supérieure 4 et la face inférieure 6 présentent respectivement une largeur L1 et L2.

La face supérieure 4 du support isolant 2 est pourvue d'un évidement 12 creusé centralement sur toute la longueur, formant une gorge centrale d'une profondeur prédéterminée destinée à recevoir un élément de piste 3.

La gorge centrale 12 présente une largeur G telle que le rapport de la largeur G sur la largeur L2 est compris entre 0,7 et 1 permettant d'assurer une stabilité du profilé 2 lorsqu'un frotteur de tramway vient en appui vers l'intérieur de la gorge 12.

La gorge 12 est distante de la face inférieure 6 d'une hauteur h, le rapport de la largeur L2 de la face inférieure 6 sur la hauteur h étant inférieur à 2 garantissant une bonne résistance au basculement du profilé 2 formant poutre en cas d'un différentiel de forces exercées sur la gorge 12 autour de l'axe formé par la droite d'intersection du plan d'extension de la gorge 12 et du plan médian 5 perpendiculaire à la face supérieure 4.

La largeur G de la gorge 12 est au moins égale à 10 cm et la gorge 12 comprend un fond 14 avec des arêtes longitudinales 16 dont la section transversale présente une forme en queue d'aronde.

L'âme 8 a la forme extérieure d'un lingot de section transversale trapézoïdale délimitée par une base constituée par la face inférieure 6, une face opposée à la base constituée par le fond 14 de la gorge 12, et de chaque coté symétriquement par rapport au plan médian 5 deux parois latérales 18, 20 externes au moins partiellement.

L'âme 8 est percée au niveau d'un premier étage alvéolaire 21 à partir de la face inférieure 6 d'une première rangée de trois alvéoles longitudinales 22, 24, 26 formant trois conduits destinés à recevoir des câbles électriques.

Les conduits 22, 24, 26 sont disposés de manière symétrique par rapport au plan médian 5 et le conduit central 24 est traversé par le plan médian.

Le conduit central 24 est destiné à recevoir le câble d'alimentation apte à transporter des courants électriques élevés sous haute tension par exemple 750 volts pour une application tramways.

Les conduits latéraux 22 et 26 sont destinés à recevoir des connecteurs et des câbles de basses tensions, c'est à dire des tensions notablement inférieures à la haute tension du câble d'alimentation, par exemple 220 Volts pour une application tramways, et à transiter des courants faibles.

L'âme 8 est également percée au niveau d'un deuxième étage alvéolaire 27 superposé au premier étage d'alvéoles 22, 24, 26 et en dessous de la gorge centrale 12 d'une deuxième rangée de trois alvéoles longitudinales 28, 30, 32 de fixation de piste permettant un accès à des moyens de fixation non représentés sur les Figures 1 et 2, par exemple de type vis-écrou intégrés dans ou aux alvéoles 28, 30, 32 et aptes à fixer un élément de piste 3 au fond 14 de la gorge 12.

Les alvéoles de fixation 28, 30, 32 sont disposées de manière symétrique par rapport au plan médian 5 et l'alvéole 30 est traversée de manière centrale par le plan médian 5.

L'alvéole centrale de fixation 30 est apte à recevoir également un câble d'alimentation du réseau électrique sous haute tension et à servir de conduit d'alimentation tout comme le conduit d'alimentation central 24 du premier étage alvéolaire 21.

Seuls l'alvéole de fixation centrale 30 et le conduit d'alimentation central sont aptes à recevoir un ou des câbles d'alimentation des pistes.

Les alvéoles 22, 24, 26, 28, 30, 32 sont ainsi réparties en trois tranches 34, 36, 38, une première tranche 34 contenant les alvéoles 22, 28, une deuxième tranche 36 centrale contenant les alvéoles 24, 30 et une troisième tranche 38 contenant les alvéoles 26, 32.

La première tranche 34 est délimitée par la paroi externe 18 inclinée par rapport au plan médian 5 et une première moitié d'une première paroi interne 40 parallèle au plan médian 5.

La deuxième tranche 36 centrale est délimitée par la deuxième moitié de la première paroi interne 36 et une première moitié d'une deuxième paroi interne 42 parallèle au plan médian 5.

La troisième tranche 38 est délimitée par la deuxième moitié de la deuxième paroi interne 42, respectivement la paroi externe 20, parallèle, respectivement inclinée par rapport au plan médian 5.

Les parois externes et internes 18, 20, 40, 42 relient entre elles la face supérieure 4 à la face inférieure 6.

Les deux ailes latérales longitudinales 9, 10 sont situées de chaque côté de la gorge 12 et chaque aile 9, 10 est percée d'un conduit de câble de boucle magnétique de détection 44, 46 situé à une distance au moins égale à 45 mm du bord le plus proche de la gorge 12 ou encore de 85 mm du plan médian 5.

Chaque aile 9, 10 comporte une alvéole d'allègement 48, 50 située au même niveau que les alvéoles de fixation 28, 30, 32.

En variante, le nombre de parois internes est au moins égale à trois et deux des parois internes délimitent des alvéoles centrales et symétriques par rapport au plan médian 5.

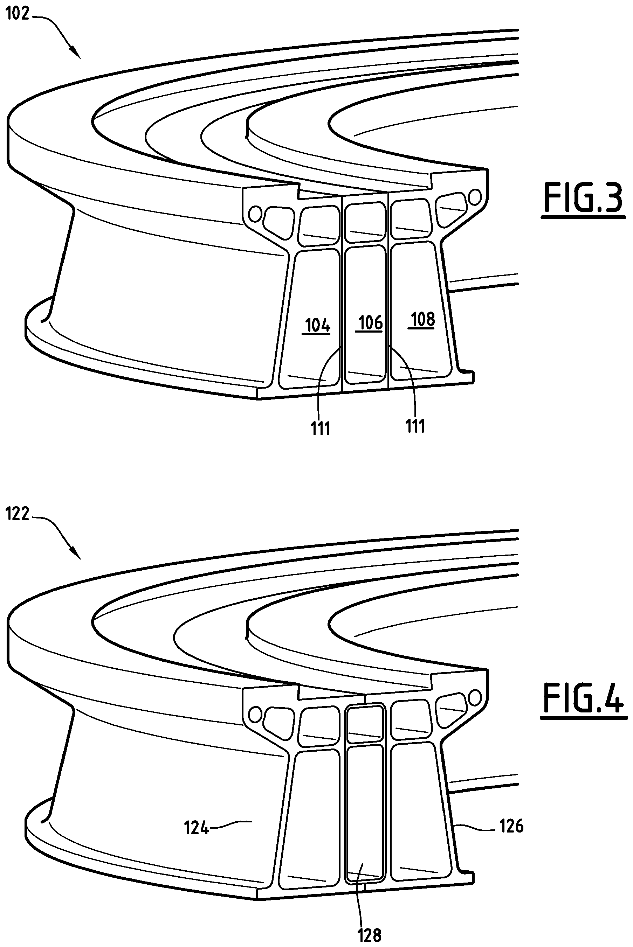

Suivant la figure 3, le support de tronçon isolant 102 est le support 2 de la figure 1 avec une forme longitudinale cintrée et une même section transversale de profilé.

Le support 102 comprend trois profilés élémentaires distincts 104, 106, 108 assemblés et fixés entre eux par des joints de colle 111.

Les profilés élémentaires 104, 106 et 108 correspondent respectivement aux tranches 34, 36, 38 de la figure 1 dont les parois internes 40 et 42 ont été découpées en deux parties d'égale épaisseur.

En pratique, les profilés élémentaires 104, 106 et 108 sont fabriqués séparément par une tireuse de profilé.

Chaque profilé élémentaire correspondant à une tranche est constitué d'un matériau composite en fibres de verre obtenu par pultrusion.

Suivant la figure 4, le support de tronçon isolant 122 est le support 2 de la figure 1 avec une forme longitudinale cintrée et une même section transversale de profilé.

Le support 122 comprend deux profilés élémentaires distincts 124, 126, assemblés et fixés entre eux par des joints de colle 127, et un insert 128 enserré entre les deux profilés élémentaires.

Les deux profilés élémentaires 124 et 128 correspondent globalement et respectivement aux tranches 34 et 38 de la figure 1 tandis que l'insert 126 correspond globalement à la tranche 36.

Les deux profilés élémentaires 124 et 128 correspondent au support isolant de la figure 1 découpé en deux selon le plan médian longitudinal 5, dans lequel les parois parallèles à la surface supérieure 4 et saillantes depuis les parois internes vers le plan 5 ont été enlevées.

En pratique, les deux profilés élémentaires 124 et 126 sont fabriqués séparément par une tireuse de profilé.

Les deux profilés 124 et 128 sont constitués en un matériau composite en fibres de verre obtenu par pultrusion.

L'insert 126 est constitué en un matériau différent flexible pour permettre le cintrage.

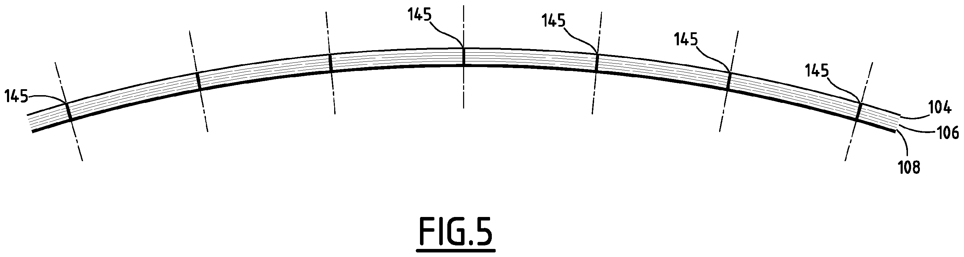

Suivant la figure 5, le support de tronçon cintré 102 de la figure 3 présente un rayon de courbure moyen affecté au profilé élémentaire 106 tandis qu'un rayon de courbure inférieur, respectivement supérieur est affecté au profilé élémentaire 108, respectivement le profilé élémentaire 104.

Le support de tronçon cintré 102 est percé régulièrement selon la longueur de trous de conduits 145 situés en dessous des ailes 9, 10 et traversant de part en part les alvéoles de conduit 22, 24, 26.

Les trous de conduits 145 sont destinés à recevoir des éléments de fixation à une matrice de préformage lors du cintrage et du collage des profilés élémentaires entre eux et à recevoir, une fois les profilés collés, des tirants, non représentés, de maintien en position de la poutre 102 précontrainte.

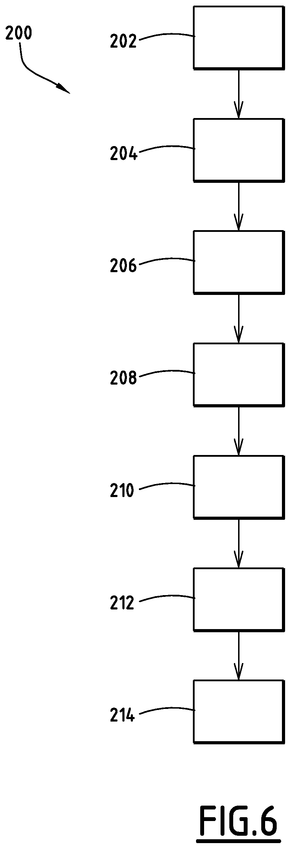

Suivant la figure 6, un procédé de fabrication 200 d'un support isolant cintré de piste d'alimentation électrique 102, le support 102 ayant la forme décrite à la figure 3, comprend un ensemble d'étapes successives.

Dans une première étape 202, une tireuse tire par pultrusion de fibres de verre trois profilés élémentaires 104, 106, 108 sur une longueur prédéterminée, chaque profilé élémentaire correspondant à une tranche longitudinale 34, 36, 38 décrite aux figures 1, 2.

Dans une étape suivante 204, les profilés élémentaires 104, 106, 108 sont disposés côte à côte selon le sens de la longueur de manière à pouvoir obtenir la forme du support 102.

Puis, dans une étape 206, les surfaces longitudinales de chaque profilé élémentaire destinées à être en contact sont encollées. Ainsi, les deux moitiés de la première paroi interne disposées en vis à vis sont encollées. De même, les deux moitiés de la deuxième paroi interne disposées en vis à vis sont encollées.

Puis dans une étape 208, les profilés élémentaires 104, 106, 108 sont cintrés par précontrainte sur une matrice de préformage selon un rayon de courbure centré autour d'une valeur moyenne prédéterminée, le rayon de courbure variant de manière croissante en fonction de la position du profilé élémentaire par rapport à un centre de courbure.

Suivant la figure 5 un rayon de courbure moyen est affecté au profilé élémentaire 106 tandis qu'un rayon de courbure inférieur, respectivement supérieur est affecté au profilé élémentaire 108, respectivement au profilé élémentaire 104.

Dans une étape 210, les profilés élémentaires 104, 106, 108 sont serrés à l'aide de tirants sur la matrice de préformage et collés entre eux.

Puis dans une étape 212, les deux extrémités du support isolant sont reprises en mettant à un même niveau les extrémités de chaque profilé élémentaire,

Puis, dans une étape 214, la matrice est démontée et les tirants sont resserrés sur le support isolant, formant ainsi des éléments de sécurité en cas de décollage.

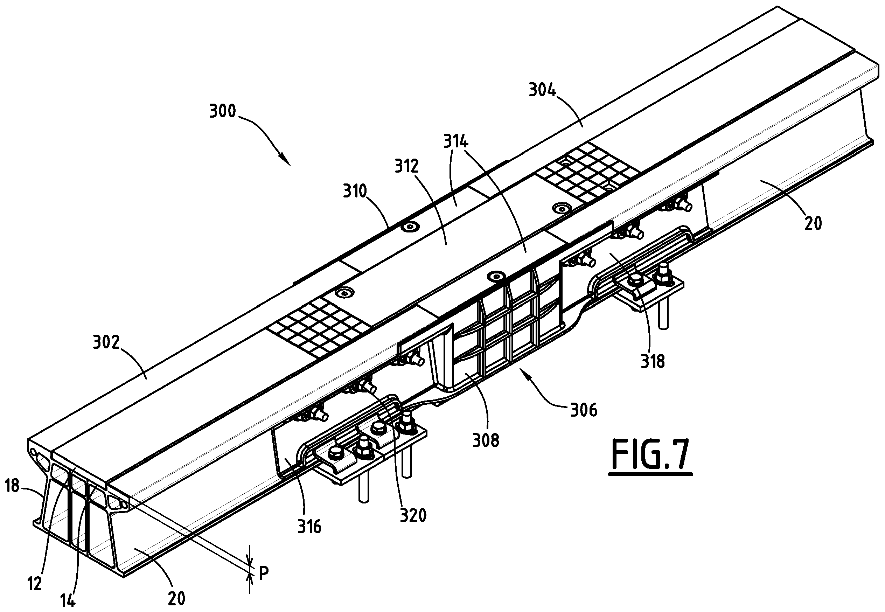

On a représenté sur la Figure 7, l'assemblage de deux supports isolants 302, 304 du type décrit à la figure 1 raccordés par l'intermédiaire d'une éclisse 306.

L'éclisse 306 comporte deux flasques latéraux 308, 310 d'extension longitudinale, et un couvercle 312 avec deux ailes latérales 314 d'extension longitudinale et d'une épaisseur prédéterminée.

Chaque flasque latéral 308, 310 comprend une face interne non visible sur la figure 7 conformée à ses deux extrémités longitudinales 316, 318 à la forme externe des deux parois externes respectives des deux supports 302, 304 situées du même coté, c'est-à-dire les parois externes 20 pour le flasque latéral 308, et les parois externes 18 pour le flasque latéral 310.

L'épaisseur du couvercle 312 est légèrement supérieure à la profondeur P de la gorge 12 et égale à l'épaisseur d'une piste d'alimentation.

Les flasques latéraux 308, 310 comprennent chacun une nervure de support du couvercle non visible sur la figure 7.

Les nervures sont disposées sur la face interne associée de chaque flasque de sorte à être situées chacune au même niveau que le fond 14 de la gorge 12 lorsque les flasques latéraux 308, 310 sont assemblés aux parois latérales 20, 18 associées des deux supports isolants 302, 304.

Les flasques 308, 310 sont serrés autour des supports isolants 302, 304 par l'intermédiaire par exemple de boulons dont l'un est désigné par la référence générale 320.

Ainsi, l'éclisse 306 permet le raccord des deux supports isolants 302, 304 et le passage du frotteur d'un tramway sans accroc.

La disposition centrale autour du plan médian 5 de la gorge unique 12 et des conduits d'alimentation empêche la création de boucles de courants parasites entre les conducteurs disposés dans la gorge 12 et les conduits d'alimentation 24, 30, les boucles de courant parasites créées étant situées dans un plan parallèle au plan d'extension de la boucle de détection de champ magnétique formée par les conducteurs logés dans les deux conduits de câble de boucle magnétique de détection 44, 46.

La grande largeur de la gorge centrale unique G empêche un blocage du frotteur de largeur plus petite, en particulier dans les virages.

Le dépassement sur chaque côté par la face supérieure 4 isolante de la gorge d'une distance supérieure à 45 mm par rapport à un bord de la gorge 12 empêche des phénomènes d'amorçage d'arcs électriques entre un élément de piste conducteur 3 et l'environnement métallique extérieur au support isolant 2.

Le déport latéral sur leur cotés respectifs des deux conduits de câble de boucle magnétique de détection 44, 46 d'une distance au moins égale à 35 mm par rapport à un bord de la gorge 12 empêche le positionnement du frotteur au-dessus d'un câble de la boucle magnétique de détection.

Ce déport latéral permet également d'éviter l'absorption par un élément de piste conducteur 3 du champ magnétique créé par la boucle de détection magnétique et un masquage trop important vis-à-vis d'une antenne de communication embarquée à bord d'un tramway.

La forme en queue d'aronde da la section transversale des arêtes facilite le montage et le démontage des éléments de piste 3 pour lesquels un usinage très précis n'est pas nécessaire.

## Revendications

1. Support isolant de piste d'alimentation électrique par le sol destiné à un système de transport terrestre, notamment de type tramway, sous forme d'un profilé en matériau isolant comprenant une face supérieure (4) sensiblement plane destinée à recevoir des éléments de piste d'alimentation électrique et une face inférieure (6) plane destinée à prendre appui sur le sol, le profilé étant muni d'une gorge longitudinale (12) disposée dans la face supérieure (4) pour recevoir un élément de piste conducteur (3),
**caractérisé en ce que**
le profilé est muni d'une âme (10) reliant la face supérieure (4) à la face inférieure (6) et percée d'au moins un conduit d'alimentation longitudinal (24) destiné à recevoir une ligne d'alimentation du réseau haute tension, et
la gorge longitudinale (12) est unique, et
la gorge longitudinale (12) et chaque conduit d'alimentation (24) sont disposés de manière centrale et de manière symétrique autour d'un plan médian longitudinal (5) du support perpendiculaire à la face supérieure (4).

2. Support isolant selon la revendication 1, **caractérisé en ce que** la largeur (G) de la gorge (12) est au moins égale à 10 cm.

3. Support isolant selon l'une des revendications 1 à 2, **caractérisé en ce que** la gorge (12) comprend un fond (14) dont la section transversale des arêtes longitudinales (16) présente une forme en queue d'aronde.

4. Support isolant selon l'une des revendications 1 à 3 **caractérisé en ce que** la face supérieure (4) isolante dépasse sur chaque coté dans le sens de la largeur un bord longitudinal de la gorge d'une distance supérieure ou égale à 45 mm.

5. Support isolant selon l'une des revendications 1 à 4 comprenant au moins une alvéole de fixation (28, 30, 32) de piste située en dessous de la gorge centrale (12), l'alvéole de fixation (28, 30, 32) étant pourvue d'un moyen de fixation.

6. Support isolant selon la revendication 5, **caractérisé en ce qu'**une alvéole de fixation (30) est un conduit d'alimentation.

7. Support isolant selon l'une des revendications 1 à 6, caractérisé en qu'il comprend deux ailes latérales longitudinales (9, 10) situées de chaque côté de la gorge (12), chaque aile (9, 10) étant percée d'un conduit (44, 46) de câble de boucle magnétique de détection situé à une distance au moins égale à 85 mm par rapport au plan médian (5).

8. Support isolant selon la revendication 7, **caractérisé en ce que** chaque aile (9, 10) comporte une alvéole d'allègement (48, 50) située à un même niveau que les alvéoles de fixation (28, 30, 32).

9. Support isolant selon l'une des revendications 1 à 8, **caractérisé en ce qu'**il comprend une paire de parois externes (18, 20) et au moins une paire de parois internes (40, 42) respectivement inclinées et parallèles par rapport au plan médian (5), les deux parois de chaque paire étant symétriques par rapport au plan médian (5) et reliant la face supérieure (4) à la face inférieure (6).

10. Support isolant selon la revendication 9, **caractérisé en ce qu'**il comprend une seule paire de parois internes reliant la face supérieure à a la face inférieure.

11. Support isolant selon l'une quelconque des revendications 1 à 10, **caractérisé en ce qu'**il est monobloc.

12. Support isolant selon la revendication 10, **caractérisé en ce qu'**il comprend trois profilés élémentaires distincts (104, 106, 108) correspondant respectivement à trois tranches (34, 36, 38), une première tranche (34) comprenant une première paroi externe (18) et une première moitié d'une première paroi interne (40), une deuxième tranche centrale (36) comprenant une deuxième moitié de la première paroi interne (40) et une première moitié d'une deuxième paroi interne (42), une troisième tranche (38) comprenant une deuxième moitié de la deuxième paroi interne (42) et une deuxième paroi externe (20), et **en ce que**
les trois profilés élémentaires (104, 106, 108) sont fixés côte à côte entre eux par un moyen de fixation notamment de la colle.

13. Support isolant selon la revendication 12 **caractérisé en ce que** les trois profilés élémentaires distincts (104, 106, 108) présentent chacune un rayon de courbure allant croissant depuis le profilé élémentaire situé le plus près d'un centre de courbure jusqu'au profilé élémentaire situé la plus loin du centre de rayon de courbure.

14. Support isolant selon la revendication 10, **caractérisé en ce qu'**il comprend deux profilés élémentaires distincts (124, 126) assemblés et fixés entre eux et un insert (128) longitudinal, percé de l'au moins un conduit central (24), enserré entre les deux profilés élémentaires (124, 126).

15. Support isolant selon l'une quelconque des revendications 1 à 13, **caractérisé en ce que** le matériau isolant est un matériau composite en fibres de verre pultrudées.

16. Assemblage de deux supports isolants (302, 304) selon l'une quelconque des revendications 1 à 15, **caractérisé en ce qu'**il comprend une éclisse (306) de raccordement des deux supports isolants (302, 304), l'éclisse comportant deux flasques latéraux (308, 310) d'extension longitudinale, et un couvercle (312) avec deux ailes latérales (314) d'extension longitudinale et d'une épaisseur prédéterminée, et **en ce que**
chaque flasque latéral (308, 310) comprend une face interne conformée à ses deux extrémités longitudinales (316, 318) à la forme externe des deux parois externes (20, 18) situées du même côté des deux supports (302, 304).

17. Assemblage de deux supports isolants selon la revendication 16, **caractérisé en ce que** l'épaisseur du couvercle (312) est légèrement supérieure à la profondeur (P) de la gorge (12), et les flasques latéraux (308, 310) comprennent chacun une nervure de support du couvercle (312) disposée sur la face interne associée de sorte à être située chacune au même niveau que le fond (14) de la gorge (12) lorsque les flasques latéraux (308, 310) sont assemblés aux parois externes (20, 18) des deux supports isolants (302, 304).

18. Assemblage de deux supports isolants selon l'une quelconque des revendications 16 à 17, **caractérisé en ce qu'**il comprend des moyens de serrage (320) des flasques latéraux (308, 310) autour des supports isolants (302, 304).

19. Procédé de fabrication d'un support isolant (102) de piste d'alimentation électrique par le sol destiné à un système de transport terrestre notamment de type tramway, comprenant les étapes consistant à :
tirer (202) par pultrusion de fibres de verre au moins deux profilés élémentaires (104, 106, 108) sur une longueur prédéterminée, chaque profilé élémentaire correspondant à une tranche longitudinale (32, 34, 36) d'un profilé (102) de support en matériau isolant, le profilé de support (102) comprenant une face supérieure (4) sensiblement plane destinée à recevoir des éléments de piste d'alimentation électrique et une face inférieure (6) plane destinée à prendre appui sur le sol, le profilé étant munie d'un gorge centrale longitudinale (12) disposée sur la face supérieure (4) pour recevoir un élément de piste conducteur, et étant muni d'une âme (10) reliant la face supérieure (4) à la face inférieure (6) et percée d'au moins un conduit longitudinal (24) destiné à recevoir une ligne d'alimentation du réseau sous haute tension, la gorge (12) étant unique, la gorge (12) et chaque conduit d'alimentation (24) étant disposé de manière symétrique autour d'un plan médian longitudinal (3) perpendiculaire à la face supérieure (4),
disposer (204) les profilés élémentaires (104, 106, 108) côte à côte,
encoller (206) des surfaces longitudinales de chaque profilé élémentaire (104, 106, 108) correspondant à la mise en contact des tranches (32, 34, 36),
cintrer (208) en les assemblant les profilés élémentaires (104, 106, 108) par précontrainte sur une matrice de préformage selon un rayon de courbure centrée autour d'une valeur moyenne prédéterminée, le rayon de courbure variant de manière croissante en fonction de la position du profilé élémentaire par rapport à un centre de courbure,
coller (210) les profilés élémentaires entre en les serrant à l'aide de tirants,
reprendre (212) les deux extrémités du support isolant (102) en mettant à un même niveau les extrémités de chaque profilé élémentaire,
resserrer (214) les profilés élémentaires (104, 106, 108) par des tirants formant des éléments de sécurité en cas de décollage des profilés élémentaires.

## Patentansprüche

1. Isolationsstütze für eine Bahn zur Stromversorgung über den Boden, die für ein Bodentransportsystem insbesondere des Straßenbahntyps vorgesehen ist, in Form eines Profils aus isolierendem Material, aufweisend eine im Wesentlichen ebene obere Seite (4), die vorgesehen ist, um Elemente einer Stromversorgungsbahn aufzunehmen, und eine ebene untere Seite (6), die vorgesehen ist, um auf dem Boden abgestützt zu sein, wobei das Profil mit einer Längsauskehlung (12) ausgestattet ist, die in der oberen Seite (4) angeordnet ist, um ein leitendes Bahnelement (3) aufzunehmen,
**dadurch gekennzeichnet, dass**
das Profil mit einem Steg (10) ausgestattet ist, der die obere Seite (4) mit der unteren Seite (6) verbindet und von mindestens einem Längsversorgungskanal (24) durchdrungen wird, der vorgesehen ist, um eine Versorgungsleitung des Hochspannungsnetzes aufzunehmen, und
die Längsauskehlung (12) die einzige ist, und
die Längsauskehlung (12) und jeder Versorgungskanal auf zentrale und symmetrische Weise um eine Längsmittelebene (5) der Stütze herum, die senkrecht zu der oberen Seite (4) ist, angeordnet sind.

2. Isolationsstütze gemäß Anspruch 1, **dadurch gekennzeichnet, dass** die Breite (G) der Auskehlung (12) mindestens gleich 10 cm ist.

3. Isolationsstütze gemäß einem der Ansprüche 1 bis 2,
**dadurch gekennzeichnet, dass** die Auskehlung (12) einen Boden (14) aufweist, dessen Querschnitt der Längskanten (16) eine Schwalbenschwanzform aufweist.

4. Isolationsstütze gemäß einem der Ansprüche 1 bis 3,
**dadurch gekennzeichnet, dass** die isolierende obere Seite (4) auf jeder Seite in der Richtung der Breite über einen Längsrand der Auskehlung in einem Abstand von größer oder gleich 45 mm hervorsteht.

5. Isolationsstütze gemäß einem der Ansprüche 1 bis 4, aufweisend mindestens eine Bahnbefestigungszelle (28, 30, 32), die unter der zentralen Auskehlung (12) angeordnet ist, wobei die Befestigungszelle (28, 30, 32) mit einem Befestigungsmittel versehen ist.

6. Isolationsstütze gemäß Anspruch 5, **dadurch gekennzeichnet, dass** eine Befestigungszelle (30) eine Versorgungsleitung ist.

7. Isolationsstütze gemäß einem der Ansprüche 1 bis 6,
**dadurch gekennzeichnet, dass** sie zwei laterale Längsflügel (9, 10) aufweist, die auf jeder Seite der Auskehlung (12) angeordnet sind, wobei jeder Flügel (9, 10) von einem Kabelkanal (44, 46) einer magnetischen Detektionsschleife durchdrungen wird, der bezüglich der Mittelebene (5) in einem Abstand von mindestens gleich 85 mm angeordnet ist.

8. Isolationsstütze gemäß Anspruch 7, **dadurch gekennzeichnet, dass** jeder Flügel (9, 10) eine Entlastungszelle (48, 50) aufweist, die auf einer gleichen Höhe wie die Befestigungszellen (28, 30, 32) angeordnet ist.

9. Isolationsstütze gemäß einem der Ansprüche 1 bis 8,
**dadurch gekennzeichnet, dass** sie ein Paar von äußeren Wänden (18, 20) und mindestens ein Paar von inneren Wänden (40, 42) aufweist, die jeweils geneigt und parallel zu der Mittelebene (5) sind, wobei die beiden Wände jedes Paares bezüglich der Mittelebene (5) symmetrisch sind und die obere Seite (4) mit der unteren Seite (6) verbinden.

10. Isolationsstütze gemäß Anspruch 9, **dadurch gekennzeichnet, dass** sie ein einziges Paar von inneren Wänden aufweist, die die obere Seite mit der unteren Seite verbinden.

11. Isolationsstütze gemäß irgendeinem der Ansprüche 1 bis 10, **dadurch gekennzeichnet, dass** sie aus einem Stück ist.

12. Isolationsstütze gemäß Anspruch 10, **dadurch gekennzeichnet, dass** sie drei verschiedene Elementarprofile (104, 106, 108) aufweist, die jeweils drei Teilabschnitten (34, 36, 38) entsprechen, wobei ein erster Teilabschnitt (34) eine erste äußere Wand (18) und eine erste Hälfte einer ersten inneren Wand (40) aufweist, ein zweiter zentraler Teilabschnitt (36) eine zweite Hälfte der ersten inneren Wand (40) und eine erste Hälfte einer zweiten inneren Wand (42) aufweist, ein dritter Teilabschnitt (38) eine zweite Hälfte der zweiten inneren Wand (42) und eine zweite äußere Wand (20) aufweist, und dass
die drei Elementarprofile (104, 106, 108) durch ein Befestigungselement, insbesondere einen Klebstoff nebeneinander aneinander befestigt sind.

13. Isolationsstütze gemäß Anspruch 12, **dadurch gekennzeichnet, dass** die drei verschiedenen Elementarprofile (104, 106, 108) jeweils einen Krümmungsradius haben, der von dem Elementarprofil aus, das am nächsten bei einem Krümmungsmittelpunkt ist, bis zu dem Elementarprofil, das am weitesten von der Krümmungsradiusmitte entfernt ist, größer wird.

14. Isolationsstütze gemäß Anspruch 10, **dadurch gekennzeichnet, dass** sie aufweist: zwei verschiedene Elementarprofile (124, 126), die aneinander montiert und befestigt sind, und einen Längseinsatz (128), der von dem mindestens einen zentralen Kanal (24) durchdrungen wird, der zwischen den beiden Elementarprofilen (124, 126) eingeschlossen ist.

15. Isolationsstütze gemäß irgendeinem der Ansprüche 1 bis 13, **dadurch gekennzeichnet, dass** das isolierende Material ein Verbundmaterial aus pultrudierten Glasfasern ist.

16. Anordnung von zwei Isolationsstützen (302, 304) gemäß irgendeinem der Ansprüche 1 bis 15, **dadurch gekennzeichnet, dass** sie eine Lasche (306) zum Verbinden der beiden Isolationsstützen (302, 304) aufweist, wobei die Lasche zwei seitliche Flansche (308, 310) mit einer Längserstreckung und eine Abdeckung (312) mit zwei seitlichen Flügeln (314) mit einer Längserstreckung und einer vorbestimmten Dicke aufweist, und dass
jeder seitliche Flansch (308, 310) eine Innenseite aufweist, die an ihren beiden Längsenden (316, 318) der äußeren Form der beiden äußeren Wände (20, 18) entspricht, die auf der gleichen Seite der beiden Stützen (302, 304) angeordnet sind.

17. Anordnung von zwei Isolationsstützen gemäß Anspruch 16, **dadurch gekennzeichnet, dass** die Dicke der Abdeckung (312) etwas größer als die Tiefe (P) der Auskehlung (12) ist, und die seitlichen Flansche (308, 310) jeweils eine Rippe zum Abstützen der Abdeckung (312) aufweisen, die derart an der zugehörigen Innenseite angeordnet ist, dass sie jeweils auf der gleichen Höhe wie der Boden (14) der Auskehlung (12) angeordnet ist, wenn die seitlichen Flansche (308, 310) an den äußeren Wänden (20, 18) der beiden Isolationsstützen (302, 304) montiert sind.

18. Anordnung von zwei Isolationsstützen gemäß irgendeinem der Ansprüche 16 bis 17, **dadurch gekennzeichnet, dass** sie Mittel zum Einspannen (320) der seitlichen Flansche (308, 310) um die Isolationsstützen (302, 304) herum aufweist.

19. Verfahren zum Herstellen einer Isolationsstütze (102) für eine Bahn zur Stromversorgung über den Boden, die für ein Bodentransportsystem insbesondere des Straßenbahntyps vorgesehen ist, aufweisend die Schritte bestehend aus:
Ziehen (202) durch Strangziehen von Glasfasern von mindestens zwei Elementarprofilen (104, 106, 108) über eine vorbestimmte Länge, wobei jedes Elementarprofil einem Längsteilabschnitt (32, 34, 36) eines Stützprofils (102) aus isolierendem Material entspricht, wobei das Stützprofil (102) eine im Wesentlichen ebene obere Seite (4), die vorgesehen ist, um Elemente einer Stromversorgungsbahn aufzunehmen, und eine ebene untere Seite (6), die vorgesehen ist, um auf dem Boden abgestützt zu sein, aufweist, wobei das Profil mit einer zentralen Längsauskehlung (12) ausgestattet ist, die auf der oberen Seite (4) angeordnet ist, um ein leitendes Bahnelement (3) aufzunehmen, und mit einem Steg (10) ausgestattet ist, der die obere Seite (4) mit der unteren Seite (6) verbindet und von mindestens einem Längskanal (24) durchdrungen wird, der vorgesehen ist, um eine Versorgungsleitung des Hochspannungsnetzes aufzunehmen, wobei die Auskehlung (12) die einzige ist, wobei die Auskehlung (12) und jeder Versorgungskanal (24) symmetrisch um eine Längsmittelebene (3), die senkrecht zu der oberen Seite (4) ist, angeordnet ist,
Anordnen (204) der Elementarprofile (104, 106, 108) nebeneinander,
Kleben (206) der Längsflächen jedes Elementarprofils (104, 106, 108) entsprechend dem in-Kontakt-Bringen der Teilabschnitte (32, 34, 36),
Rundbiegen (208) durch Montieren der Elementarprofile (104, 106, 108) durch Vorspannen auf einer Vorformmatrize entlang einem Radius einer Krümmung, die um einen vorbestimmten Mittelwert herum zentriert ist, wobei der Krümmungsradius derart variiert, dass er in Abhängigkeit von der Position des Elementarprofils bezüglich eines Krümmungsmittelpunktes zunimmt,
Kleben (210) der Elementarprofile aneinander, wobei sie mit Hilfe von Zugelementen eingespannt werden,
Wiederaufnehmen (212) der beiden Enden der Isolationsstütze (102), wobei die Enden jedes Elementarprofils auf eine gleiche Höhe gesetzt werden,
Nachspannen (214) der Elementarprofile (104, 106, 108) durch Zugelemente, die im Fall eines Lösens der Klebeverbindung der Elementarprofile Sicherheitselemente bilden.

## Claims

1. Insulating support for a ground-based electrical power supply track which is intended for a terrestrial transport system, in particular of the tramway type, in the form of a profile-member of insulating material which comprises a substantially planar upper face (4) which is intended to receive the elements of the electrical power supply track and a planar lower face (6) which is intended to be supported on the ground, the profile-member being provided with a longitudinal groove (12) which is arranged in the upper face (4) in order to receive a conductive track element (3), **characterised in that** the profile-member is provided with a web (10) which connects the upper face (4) to the lower face (6) and through which at least one longitudinal supply conduit (24) which is intended to receive an electrical power supply line of the high-voltage network extends, and
there is only one longitudinal groove (12), and
the longitudinal groove (12) and each supply conduit (24) are arranged centrally and symmetrically about a longitudinal centre plane (5) of the support perpendicular relative to the upper face (4).

2. Insulating support according to claim 1, **characterised in that** the width (G) of the groove (12) is at least 10 cm.

3. Insulating support according to either claim 1 or claim 2, **characterised in that** the groove (12) comprises a base (14), the cross-section of the longitudinal edges (16) of which is of dovetail-like shape.

4. Insulating support according to any one of claims 1 to 3, **characterised in that** the insulating upper face (4), at each side in the direction of the width, protrudes beyond a longitudinal edge of the groove by a distance greater than or equal to 45 mm.

5. Insulating support according to any one of claims 1 to 4, comprising at least one track fixing cell (28, 30, 32) which is located below the central groove (12), the fixing cell 28, 30, 32) being provided with a fixing means.

6. Insulating support according to claim 5, **characterised in that** a fixing cell (30) is a supply conduit.

7. Insulating support according to any one of claims 1 to 6, **characterised in that** it comprises two longitudinal lateral flanges (9, 10) which are located at each side of the groove (12), a magnetic detection loop cable conduit (44, 46) which is located at a distance of at least 85 mm relative to the centre plane (5) extending through each flange.

8. Insulating support according to claim 7, **characterised in that** each flange (9, 10) comprises a weight-reduction cell (48, 50) which is located at the same level as the fixing cells (28, 30, 32).

9. Insulating support according to any one of claims 1 to 8, **characterised in that** it comprises a pair of external walls (18, 20) and at least one pair of internal walls (40, 42) which are inclined and parallel relative to the centre plane (5), respectively, the two walls of each pair being symmetrical relative to the centre plane (5) and connecting the upper face (4) to the lower face (6).

10. Insulating support according to claim 9, **characterised in that** it comprises a single pair of internal walls which connect the upper face to the lower face.

11. Insulating support according to any one of claims 1 to 10, **characterised in that** it is integral.

12. Insulating support according to claim 10, **characterised in that** it comprises three separate elementary profile-members (104, 106, 108) which correspond to three portions (34, 36, 38), respectively, a first portion (34) comprising a first external wall (18) and a first half of a first internal wall (40), a second central portion (36) comprising a second half of the first internal wall (40) and a first half of a second internal wall (42), a third portion (38) comprising a second half of the second internal wall (42) and a second external wall (20), and **in that** the three elementary profile-members (104, 106, 108) are fixed together side by side by a fixing means, in particular adhesive.

13. Insulating support according to claim 12, **characterised in that** the three separate elementary profile-members (104, 106, 108) each have a radius of curvature which increases from the elementary profile-member located closest to a centre of curvature as far as the elementary profile-member which is located furthest from the centre of the radius of curvature.

14. Insulating support according to claim 10, **characterised in that** it comprises two separate elementary profile-members (124, 126) which are assembled and fixed together and a longitudinal insert (128), through which the at least one central conduit (24) clamped between the two elementary profile-members extends (124, 126).

15. Insulating support according to any one of claims 1 to 13, **characterised in that** the insulating material is a composite material of pultruded glass fibres.

16. Assembly of two insulating supports (302, 304) according to any one of claims 1 to 15, **characterised in that** it comprises a fishplate (306) for connecting the two insulating supports (302, 304), the fishplate comprising two lateral flanges (308, 3010) which extend longitudinally, and a cover (312) with two lateral flanges which extend longitudinally and which have a predetermined thickness, and **in that** each lateral flange (308, 310) comprises an inner face which corresponds, at both longitudinal ends (316, 318) thereof, to the outer shape of the two external walls (20, 18)located at the same side of the two supports (302, 304).

17. Assembly of two insulating supports according to claim 16, **characterised in that** the thickness of the cover (312) is slightly greater than the depth (P) of the groove (12), and the lateral flanges (308, 310) each comprise a support rib of the cover (312) arranged on the associated inner face so as to each be located at the same level as the base (14) of the groove (12) when the lateral flanges are assembled with the external walls (20, 18) of the two insulating supports (302, 304).

18. Assembly of two insulating supports according to either claim 16 or claim 17, **characterised in that** it comprises means (320) for clamping the lateral flanges (308, 310) around the insulating supports (302, 304).

19. Method for producing an insulating support (102) for a ground electrical power supply track which is intended for a terrestrial transport system, in particular of the tramway type, comprising the steps involving:
Drawing (202), by means of glass fibre pultrusion, at least two elementary profile-members (104, 106, 108) over a predetermined length, each elementary profile-member corresponding to a longitudinal portion (32, 34, 36) of a support profile-member (102) of insulating material, the support profile-member (102) comprising a substantially planar upper face (4) which is intended to receive elements of the electrical power supply track and a planar lower face (6) which is intended to be supported on the ground, the profile-member being provided with a longitudinal central groove (12) which is arranged on the upper face (4) in order to receive a conductive track element, and being provided with a web (10) which connects the upper face (4) to the lower face (6) and through which at least one longitudinal conduit (24) which is intended to receive an electrical power supply line of the high-voltage network, there being only one groove (12), the groove (12) and each supply conduit (24) being arranged in a symmetrical manner about a longitudinal centre plane (3) which is perpendicular relative to the upper face (4),
arranging (204) the elementary profile-members (104, 106, 108) side by side,
adhesively-bonding (206) longitudinal surfaces of each corresponding elementary profile-member (104, 106, 108) when placed in contact with the portions (32, 34, 36),
bending (208), when being assembled, the elementary profile-member (104, 106, 108), by means of pretensioning over a preforming die in accordance with a radius of curvature which is centred about a predetermined mean value, the radius of curvature varying increasingly in accordance with the position of the elementary profile-member relative to a centre of curvature,
adhesively-bonding (210) the elementary profile-members, clamping them using tie-rods,
taking (212) the two ends of the insulating support (102) and placing the ends of each elementary profile at the same level,
clamping (214) the elementary profile-members (104, 106, 108) using tie-rods which form safety elements in the event that the elementary profile-members become separated.
